# EUROPÄISCHE PATENTSCHRIFT

(11) **EP 1 754 561 B1**
(45) Veröffentlichungstag und Bekanntmachung des Hinweises auf die Patenterteilung: **03.11.2010**
(21) Anmeldenummer: 06022369.0
(22) Anmeldetag: 18.06.2002
(51) Int. Cl.: B23B 27/04, B23B 29/04

(54) **Schneidvorrichtung**
Cutting device
Dispositif de coupe

(30) Priorität: 05.07.2001 DE 10132721
(43) Veröffentlichungstag der Anmeldung: 21.02.2007
(62) Teilanmeldung aus: 02782421.8
(73) Patentinhaber: Hartmetall-Werkzeugfabrik Paul Horn GmbH, 72072 Tübingen (DE)
(72) Erfinder: Oettle, Matthias, 72585 Riederich (DE)
(74) Vertreter: Witte, Weller & Partner

(56) Entgegenhaltungen:
- WO-A-99/50012
- CH-A- 255 168
- CH-A- 535 083
- DE-U- 8 804 365
- FR-A- 2 373 349
- FR-A- 2 542 229
- GB-A- 1 369 096
- US-A- 3 894 322
- US-A- 5 516 241

## Beschreibung

Die Erfindung betrifft eine Schneidvorrichtung mit einem Halter, gemäß der Merkmalsausgestaltung des Oberbegriffes des Patentanspruches 1.

Eine solche Schneidvorrichtung ist aus der DE 277 55 003 A1 bekannt.

Schneidvorrichtungen (US 5 267 817 A, WO 99/50 012) sind in einer Vielzahl von Ausführungsformen Stand der Technik und auf dem Markt frei erhältlich. Die bekannten Lösungen dienen insbesondere für das Stech- und Längsdrehen sowie für Abstech- und Abtrennvorgänge an einem rotierenden Werkstück, das als Drehteil regelmäßig rotationssymmetrisch aufgebaut ist. Die bekannten Schneidvorrichtungen weisen einen länglichen Halter mit quadratischem Querschnitt auf, der sich über den Bereich seines einen freien Endes an einem Werkzeughalter festlegen läßt, wobei mehrere Schneidvorrichtungen in einer Haltervorrichtung aufgenommen sein können und wobei häufig beengte Einbauverhältnisse vorhanden sind. Die Schneidvorrichtungen können dabei in der Gesamt-Haltervorrichtung übereinander, jedoch auch unmittelbar nebeneinander liegend in Reihe angeordnet sein. An seinem anderen Ende geht der Halter einstückig in einen blockartigen Klemmkopf über, der an seiner einen Seite über eine Aufnahme das spanabhebende Werkzeug aufnimmt. Dieser blockartige Klemmkopf weist nach allen Seiten hin im wesentlichen ebene Flächen auf, die im jeweils rechten Winkel ineinander übergehen. Insbesondere die Stirnseite des Klemmkopfes ist in Form einer geraden Ebene ausgebildet, die im rechten Winkel zu den Unter- und Oberseiten sowie den Längsseiten des Halters verläuft. Von dieser flächigen Ebene nach vorne in Richtung der Bearbeitungszone steht das spanende Werkzeug mit seiner Bearbeitungsschneide über und im Hinblick auf den genannten geometrischen Aufbau des Klemmkopfes muß die Schneide des Bearbeitungswerkzeuges am rotierenden Werkstück erst einen Freiraum schaffen, damit für eine tiefergehende Bearbeitung der Klemmkopf über seine gesamte Breite nachfolgen kann. Insbesondere bei einer beengten Einbausituation für die Schneidvorrichtung und bei kleinräumigen Bearbeitungsgebieten am rotierenden Werkstück, in das man beispielsweise nur eine dünne Bearbeitungsnut einbringen möchte, sind die bekannten Lösungen untauglich, da in dahingehenden Fällen das rotierende Werkstück dann mit der Stirnseite des Klemmkopfes kollidieren würde.

Durch die US-A-6 241 429 ist eine gattungsgemäße Schneidvorrichtung mit einem Halter bekannt, der an einem Klemmkopf für die Aufnahme eines spanabhebenden austauschbaren Werkzeuges mit einer maulartigen Aufnahme versehen ist, die an einer Längsseite des Klemmkopfes angeordnet ist, dessen quer zu seiner Längsseite verlaufende Stirnseite einem für die spanabhebende Bearbeitung rotierenden Werkstück zugewandt ist, wobei die Stirnseite im Bereich, der sich an die Aufnahme anschließt, mit einer Wölbung versehen ist. Mit der bekannten Lösung ist es mithin möglich, dass die gewölbte Stirnseite des Klemmkopfes gegenüber dem zur Bearbeitung anstehenden Werkstück zurücktritt, und das Bearbeitungswerkzeug steht demgegenüber, in einer Art Festlegerippe aufgenommen, in Richtung des Bearbeitungswerkzeuges deutlich vor, so dass nur in Abhängigkeit von der Breite der in Eingriff bringbaren Schneide sich eine Geometrie in dem rotierenden Werkstück vorgeben lässt, beispielsweise in Form einer ausgesprochen im Querschnitt schmal verlaufenden Ausnahmenut oder dergleichen. Durch die gewölbte Stirnfläche wird ein Raum geschaffen, in dem sich das rotierende Werkstück bewegen kann, so dass im Grunde der Klemmkopf während der Bearbeitung Teile des Werkstückes mit aufnimmt und dergestalt es ermöglicht ist, dass das Bearbeitungswerkzeug über eine hohe Eindringtiefe verfügt, ohne dass der Klemmkopf erst in einen frei zu spanenden Raum des rotierenden Werkzeugs nachzuführen wäre.

In der DE 277 55 003 A1 (FR 2 373 349) ist ein Schneidwerkzeug mit einer Schneidplatte bekannt, dessen einer dünnerer Endabschnitt durch einen Spalt so geteilt ist, dass derselbe aus zwei Schenkeln besteht, welche an ihren freien Enden Ausnehmungen zur Aufnahme der Schneidplatte aufweisen. Der Spalt erstreckt sich von dem dünneren Abschnitt des Werkzeugkörpers in den Werkzeugkörper. Ferner ist ein zweiter Spalt im Werkzeugkörper vorgesehen, der vom ersten Spalt durch eine elastisch verformbare Scheidewand getrennt ist und im Werkzeugkörper einen am oberen Schenkel angeformten Absatz freilässt, auf den geeignete Betätigungsmittel, insbesondere ein Gewindestift, wirken, die danach streben, den Absatz vom restlichen Körper so zu entfernen, dass sich die Schenkel mit der dazwischen befindlichen Schneidplatte zueinander schließen.

Ausgehend von diesem Stand der Technik liegt der Erfindung die Aufgabe zugrunde, eine Schneidvorrichtung der zuletzt genannten gattungsgemäßen Art unter Beibehalten ihrer Vorteile, nämlich auch schmale Geometrien in ein Werkstück spanend in vorgebbarer Tiefe einzubringen, ohne dass es zu Kollisionen zwischen dem Bearbeitungswerkzeug und dem Werkstück kommt, weiter zu verbessern. Erfindungsgemäß ist diese Aufgabe durch eine Schneidvorrichtung gelöst, die die Merkmale des Anspruches 1 in seiner Gesamtheit aufweist.

Bei einer erfindungsgemäßen Schneidvorrichtung ist die Aufnahme Teil einer Festlegerippe, die als integraler Bestandteil des Klemmkopfes von diesem vorsteht, wobei bei einer bevorzugten Ausführungsform die Wölbung der Stirnseite vom Bereich der Aufnahme bis zur Unterseite des Klemmkopfes sich erstreckt. Aufgrund dieser Festlegerippe ist dennoch eine ausgesteifte Gesamtkonstruktion im Bereich des Klemmkopfes erhalten und die bei der Bearbeitung auftretenden Kräfte können sicher von der Schneide des Bearbeitungswerkzeuges über dieses in die Festlegerippe und damit in den sonstigen Klemmkopf abgeleitet werden.

Bei einer weiteren besonders bevorzugten Ausführungsform der erfindungsgemäßen Schneidvorrichtung geht die gewölbte Stirnfläche an der Unterseite des Klemmkopfes in eine Abstützfläche über, die schräg zur Vorschubrichtung des Werkzeuges sich von der Aufnahme in Richtung des Klemmkopfes erstreckt. Über die dahingehende schräge Abstützfläche wird der Materialeinsatz für den Klemmkopf weiter reduziert und dennoch ist die Gesamtkonstruktion des Klemmkopfes über die Abstützfläche derart ausgesteift, daß die Bearbeitungsgenauigkeit nicht beeinträchtigt ist. Da aufgrund der Abstützfläche Material im Bereich der Stirnfläche des Klemmkopfes eingespart werden kann, wird mithin im Bereich des Klemmkopfes weiterer Raum geschaffen, der vom rotierenden Werkstück bei der Bearbeitung ausgenutzt werden kann, ohne daß die Gefahr von Kollisionen gegeben ist.

Bei einer besonders bevorzugten Ausführungsform der erfindungsgemäßen Schneidvorrichtung ist der Abstand zwischen gewölbter Stirnseite des Klemmkopfes und der bearbeitenden Schneide des spanabhebenden Werkzeuges geringfügig größer als der größtmögliche Durchmesser des zur Bearbeitung mit diesem Werkzeug vorgesehenen rotierenden Werkstückes. Somit ist es möglich, entlang einer schmal aufbauenden Nutenbahn einen Abstechvorgang am Werkstück vorzunehmen, ohne daß es zu Kollisionen kommt. Es ist dann nicht mehr, wie im Stand der Technik notwendig, erst über das Werkzeug einen größeren Freiraum am Werkstück zu schaffen, um dann in mehreren Schritten den Abstechvorgang vornehmen zu können. Vielmehr ist mit einer Vorschubbewegung der Abstechvorgang möglich.

Weitere vorteilhafte Ausführungsformen sind Gegenstand der sonstigen Unteransprüche.

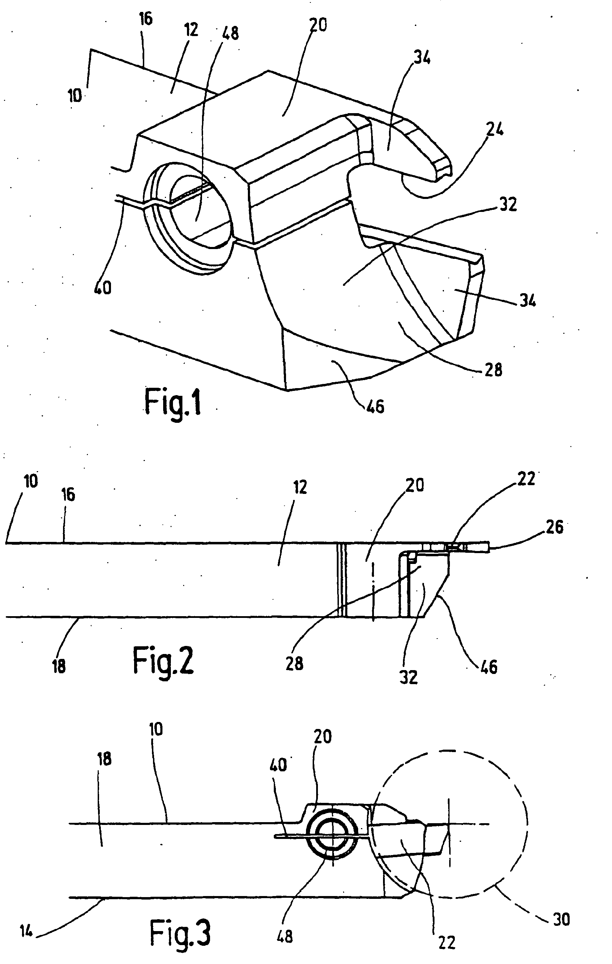

Im Folgenden wird die erfindungsgemäße Schneidvorrichtung anhand eines Ausführungsbeispieles nach der Zeichnung in verschiedenen Ansichten näher erläutert. Dabei zeigen in prinzipieller und nicht maßstäblicher Form die Fig. 1 - 3 eine perspektivische Schrägansicht bzw. Draufsicht bzw. Seitenansicht des Ausführungsbeispieles, wobei der Halter jeweils abgebrochen ist.

Wie die Fig.1 zeigt, weist die Schneidvorrichtung einen Halter 10 auf mit einem im wesentlichen quadratischen Querschnitt. In Blickrichtung auf die Fig.1 gesehen weist der Halter 10 eine Oberseite 12, eine Unterseite 14 sowie in Bearbeitungsrichtung gesehen eine linke und eine rechte Längsseite 16 bzw. 18 auf. Der Schaftteil des Halters 10 ist relativ lang ausgebildet, um dergestalt eine große Anlagefläche zu schaffen für die Halteraufnahme (nicht dargestellt) einer Werkzeugmaschine, wie einer Drehmaschine (nicht dargestellt) od. dgl.. An seinem vorderen Ende ist der Halter 10 mit einem Klemmkopf 20 versehen. Der blockartige Klemmkopf 20 geht mit seinen Seitenflächen bis auf seine Stirnseite bündig in die Seitenflächen des Halters 10 über und steht nur im Bereich der Oberseite des Halters 10 mit einem vorgebbaren Überstand vor. Für die Aufnahme eines spanabhebenden Werkzeuges 22 ist der Klemmkopf 20 mit einer maulartigen Aufnahme 24 versehen, die bei der gezeigten Ausführungsform an der linken Längsseite 16 des Klemmkopfes 20 angeordnet ist. Das spanabhebende Werkzeug 22 bildet insbesondere ein Hartmetallschneidwerkzeug aus mit zwei diametral einander gegenüberliegenden Bearbeitungsschneiden 26. In der Zeichnung ist dabei nur die zur Bearbeitung vorgesehene Bearbeitungsschneide 26 dargestellt, die bei Verschleiß durch Öffnen der maulartigen Aufnahme 24 des spanabhebenden Werkzeuges 22 freigegeben werden kann. Nach Drehen des spanabhebenden Werkzeuges 22 um 180° um seine Querachse ist dann die neue Bearbeitungsschneide 26 dadurch in Eingriff mit dem Werkstück bringbar, daß man in einem weiteren Schritt das spanabhebende Werkzeug 22 dann über die Klemmaufnahme 24 wieder am Klemmkopf 20 des Halters 10 festlegt. Der dahingehende Austausch ist üblich, so daß an dieser Stelle hierauf nicht mehr näher eingegangen wird.

Quer zu den Längsseiten 16 und 18 des Halters 10 weist der Klemmkopf 20 eine Stirnseite 28 auf, die bei einem spanabhebenden Bearbeitungsvorgang einem rotierenden Werkstück 30 (Drehteil) zugewandt ist. Das in der Fig.3 dargestellte Werkstück 30 soll mit der Schneidvorrichtung spanend bearbeitet werden, beispielsweise von außen einem Stech- oder Längsdrehvorgang ausgesetzt sein. Des weiteren soll es möglich sein, mit der Schneidvorrichtung einen Abstechvorgang durchzuführen, bei dem die Bearbeitungsschneide 26, wie in der Fig.3 dargestellt, bis zur Längsachse bzw. zur Drehmitte des Werkstückes 30 vordringt, um so Teile des Werkstückes vom Werkstück 30 zu trennen, das in einem Drehfutter od. dgl. an der Maschine verbleibt. Für die nachfolgende Beschreibung soll das Werkstück 30 einen Bearbeitungsdurchmesser von maximal 20mm aufweisen. Je nachdem, wie hier die Bearbeitungsgeometrien gewählt werden, ist dann die Schneidvorrichtung mit ihren geometrischen Abmessungen an die Bearbeitungssituation entsprechend anzupassen. Wie sich jedenfalls aus der Darstellung nach der Fig.3 ergibt, erstreckt sich in der dort dargestellten Bearbeitungssituation, bei dem die Bearbeitungsschneide 26 die Mitte des Werkstückes 30 erreicht hat, die Unterseite 14 des Halters 10 bis zur wirksamen Kante der Bearbeitungsschneide 26 über den Radius des Drehteils oder Werkstückes 30, was einer Eingriffshöhe von der Hälfte des Bearbeitungsdurchmessers, also 10mm, entspricht.

Wie sich aus den Fig.1 bis 3 und insbesondere aus der Fig.2 ergibt, ist die Stirnseite 28 zumindest im Bereich, in dem sie in die Aufnahme 24 übergeht, mit einer Wölbung 32 versehen, deren Krümmung der Krümmung des Werkstückes 30 mit dem größten Durchmesser, hier 20mm, entspricht, für das die Schneidvorrichtung als spanabhebendes Werkzeug 22 vorgesehen ist.

Die Aufnahme 24 ist Teil einer Festlegerippe 34 des Klemmkopfes 20. Die dahingehende Festlegerippe 34 in Verlängerung der linken Seite 16 des Halters 10 ist mithin integraler Bestandteil des Klemmkopfes 20.

Wie sich des weiteren aus der Fig.3 ergibt, ist der Abstand zwischen gewölbter Stirnseite 28 des Klemmkopfes 20 und der bearbeitenden Schneide 26 des spanabhebenden Werkzeuges 22 geringfügig größer als der größtmögliche Durchmesser (20mm) des zur Bearbeitung mit diesem spanabhe benden Werkzeug 22 vorgesehenen rotierenden Werkstückes 30. Somit ist im Klemmkopf 20 ein Freiraum geschaffen, in den die rotierenden Werkstückteile 30 eintreten können, ohne daß es bei einer Bearbeitung mit dem spanabhebenden Werkzeug 22 zu einer Kollision kommen würde zwischen Klemmkopf 20 des Halters 10 und dem Werkstück 30. Dergestalt lassen sich sehr große Bearbeitungstiefen am Werkstück 30 erreichen und ausgesprochen schmal aufbauende Nutgeometrien, ohne daß hierfür erst am Werkstück 30 durch Spanabhebung Platz geschaffen werden müßte für das Vordringen des Klemmkopfes 20 mit dem spanabhebenden Werkzeug 22.

Des weiteren geht die gewölbte Stirnseite 28 an der Unterseite 14 des Klemmkopfes 20 in eine Abstützfläche 46 über, die schräg zur Vorschubrichtung des spanabhebenden Werkzeuges 22 sich von der Aufnahme 24 in Richtung des Klemmkopfes 20 erstreckt. Die dahingehende Abstützfläche 46 spart wiederum Material am Klemmkopf 20 aus, was die Kollisionsgefahr mit dem zu bearbeitenden Werkstück 30 verringert. Trotz des dahingehenden Materialverzichtes kommt es über die Abstützfläche 46 sowie die gewölbte Stirnseite 28 zu einer Aussteifung der Festlegerippe 34 mit der Folge, daß trotz des geringen Materialeinsatzes für den Klemmkopf 20 das spanabhebende Werkzeug 22 sicher in seiner Aufnahme 24 fixiert ist, so daß die Schneidvorrichtung auch für hochgenaue Bearbeitungsvorgänge einsetzbar ist.

Entgegen der Darstellung nach den Fig.1 bis 3 kann die Festlegerippe 34 mit dem spanabhebenden Werkzeug 22 auch auf der gegenüberliegenden, also in Bearbeitungsrichtung auf der rechten Seite 18 angeordnet sein. Auch können gegebenenfalls in einer horizontalen Ebene mehrere Halter 10 (nicht dargestellt) mit spanabhebenden Werkzeugen 22 nebeneinander angeordnet sein, wobei dann durchaus zwei benachbart zueinander angeordnete Schneidvorrichtungen einmal auf der linken und benachbart gegenüberliegend auf der rechten Seite das spanabhebende Werkzeug 22 aufweisen können. Auch ist es möglich, in einer vertikalen Ebene mehrere der Schneidvorrichtungen übereinander in Bearbeitungsanordnung zu bringen, sofern Bearbeitungsvorgänge dies vorgeben sollten.

Der Klemmspalt 40 ist von einer Betätigungsöffnung 48 durchgriffen, die über einen nicht näher dargestellten Betätigungsschlüssel mit einem polygonalen Betätigungsquerschnitt aufgespreizt werden kann, um derart den Klemmspalt 40 zu verbreitern und die Aufnahme 24 derart zu erweitern, daß das spanabhebende Werkzeug 22 für einen Austauschvorgang freigegeben ist. Nach Weiterdrehen des Polygonschlüssels schließt sich dann wiederum die Betätigungsöffnung 48; der Klemmspalt 40 verengt sich und mithin die Aufnahme 24 für das spanabhebende Werkzeug 22, das in der Fig. 1 zeichnerisch weggelassen ist. Die Wölbung 32 tritt im Klemmkopf 20 derart zurück, daß das Werkstück 30 mit seinem maximalen Bearbeitungsdurchmesser in die freigelassenen Partien des Klemmkopfes 20 eingreifen kann. Des weiteren ist die Wölbung 32 und mithin die Festlegerippe 34 über die schräg verlaufende Abstützfläche 46 (vgl. Fig. 2) ausgesteift. Wie Fig. 1 und 3 zeigen, erstreckt sich der Klemmspalt 40 vom Klemmkopf 20 aus über die Öffnung 48 hinaus und mündet in den Endteil des Halters 10.

## Patentansprüche

1. Schneidvorrichtung mit einem Halter (10), der an einem Ende einen Klemmkopf (20) aufweist, der für die Aufnahme eines spanabhebenden Werkzeuges (22) mit einer maulartigen Aufnahme (24) versehen ist, die an einer Längsseite des Klemmkopfes (20) angeordnet und Teil einer Festlegerippe (34) ist, die als integraler Bestandteil des Klemmkopfes (20) von diesem vorsteht, wobei die quer zu der Längsseite (16) verlaufende Stirnseite (28) des Klemmkopfes (20) einem für die spanabhebende Bearbeitung rotierenden Werkstück (30) zugewandt ist, die zumindest im Bereich, in dem sie in die Aufnahme (24) mündet, mit einer Wölbung (32) versehen ist, wobei die Krümmung der Wölbung (32) der Krümmung des Werkstückes (30) mit dem grössten Durchmesser entspricht, für das die Schneidvorrichtung vorgesehen ist,
**dadurch gekennzeichnet, dass** im Klemmkopf (20) ein Klemmspalt (40) vorgesehen ist, der von der Stirnseite (28) in Richtung des Halters (10) verläuft und von einer Betätigungsöffnung (48) durchgriffen ist, die über einen Betätigungsschlüssel aufspreizbar den Klemmspalt (40) und die Aufnahme (24) für die Freigabe des spanabhebenden Werkzeugs (22) vergrössert,
und dass der Klemmspalt (40) vom Klemmkopf (20) über die Betätigungsöffnung (48) hinaus gehend in Teile des Halters (10) mündet.

2. Schneidvorrichtung nach Anspruch 1, **dadurch gekennzeichnet, dass** die Wölbung (32) der Stirnseite (28) vom Bereich der Aufnahme (24) sich bis zur Unterseite des Klemmkopfes (20) erstreckt.

3. Schneidvorrichtung nach einem der Ansprüche 1 oder 2, **dadurch gekennzeichnet, dass** die Wölbung (32) der Stirnseite (28) mit ihrer vorgegebenen Krümmung sich über die gesamte Höhe des Klemmkopfes (20) erstreckt.

4. Schneidvorrichtung nach einem der Ansprüche 1 bis 3, **dadurch gekennzeichnet, dass** der Abstand zwischen gewölbter Stirnseite (28) des Klemmkopfes (20) und der bearbeitenden Schneide (26) des spanabhebenden Werkzeuges (22) geringfügig grösser ist als der grösstmögliche Durchmesser des zur Bearbeitung mit diesem spanabhebenden Werkzeug (22) vorgesehenen rotierenden Werkstückes (30).

5. Schneidvorrichtung nach einem der Ansprüche 1 bis 4, **dadurch gekennzeichnet, dass** die gewölbte Stirnseite (28) an der Unterseite des Klemmkopfes (20) in eine Abstützfläche (46) übergeht, die schräg zur Vorschubrichtung des spanabhebenden Werkzeuges (22) sich von der Aufnahme (24) in Richtung des Klemmkopfes (20) erstreckt.

6. Schneidvorrichtung nach einem der Ansprüche 1 bis 5, **dadurch gekennzeichnet, dass** das spanabhebende Werkzeug (22) mit zwei diametral einander gegenüberliegenden wirksamen Schneiden (26) versehen ist.

## Claims

1. Cutting device with a holder (10), comprising at an end a clamping head (20), equipped with a mouth-like take-up (24) for receiving a chip removing tool (22), located on a longitudinal side of the clamping head (20) and being part of a fitting rib (34), which projects from the clamping head (20) as an integral part of the same, wherein the facing side (28) of the clamping head (20) extending transverse to the longitudinal side (16) faces a workpiece (30) rotating for the chip removing processing of the same, which facing side (28) is equipped with a bead (32) at least in the area in which the same opens out into the take-up (24), wherein the arc of the bead (32) equals the arc of the tool (30) with the largest diameter envisaged for the cutting device, **characterised in that** a clamping gap (40) is provided in the clamping head (20), which extends from the facing side (28) in the direction of the holder (10) and is penetrated by a handling opening (48) which spreadably enlarges via a handling key the clamping gap (40) and the take-up (24) for the disengaging of the chip removing tool (22), and that the clamping gap (40) opens out from the clamping head (20) beyond the handling opening (48) into parts of the holder (10).

2. Cutting device according to Claim 1, **characterised in that** the bead (32) of the facing side (28) extends from the area of the take-up (24) as far as the underside (14) of the clamping head (20).

3. Cutting device according to one of the Claims 1 or 2, **characterised in that** the bead (32) on the facing side (28) extends across the entire height of the clamping head (20) with its predetermined arc.

4. Cutting device according to one of the Claims 1 to 3, **characterised in that** the distance between the beaded facing side (28) of the clamping head (20) and the processing blade (26) of the chip removing tool (22) is somewhat larger than the largest possible diameter of the rotating workpiece (30) envisaged for processing with this chip removing tool (22).

5. Cutting device according to one of Claims 1 to 4, **characterised in that** the beaded facing side (28) transforms into a support surface (46) on the underside (14) of the clamping head (20), which extends diagonal in relation to the advancing direction of the chip removing tool (22) from the take-up (24) in the direction of the clamping head (20).

6. Cutting device according to one of the Claims 1 to 5, **characterised in that** the chip removing tool (22) is equipped with two diametrically opposing effective blades (26).

## Revendications

1. Dispositif de coupe comprenant un support (10) qui présente une tête de serrage (20) sur une extrémité, qui est munie d'un engagement en forme de mâchoire (24) pour recevoir un outil d'enlèvement de copeaux (22), qui est placé sur un côté longitudinal de la tête de serrage (20) et qui fait partie d'une nervure de fixation (34) qui fait saillie de la tête de serrage (20) en tant que partie intégrante de celle-ci, la face avant (28) de la tête de serrage (20) s'étendant transversalement au côté longitudinal (16) étant dirigée vers une pièce (30) rotative pour l'usinage par enlèvement de copeaux, laquelle face avant est munie au moins dans la zone dans laquelle elle débouche dans l'engagement (24) d'un bombement (32), la courbure du bombement (32) correspondant à la courbure de la pièce (30) avec le diamètre le plus grand pour laquelle le dispositif de coupe est prévu,
**caractérisé en ce que** dans la tête de serrage (20), une fente de serrage (40) est prévue qui s'étend de la face avant (28) en direction du support (10) et est traversée par une ouverture d'actionnement (48) qui agrandit en pouvant les écarter la fente de serrage (40) et l'engagement (24) via une clé d'actionnement pour libérer l'outil d'enlèvement de copeaux (22),
et **en ce que** la fente de serrage (40) de la tête de serrage (20) débouche en partant de l'ouverture d'actionnement (48) dans des parties du support (10).

2. Dispositif de coupe selon la revendication 1, **caractérisé en ce que** le bombement (32) de la face avant (28) s'étend depuis la zone de l'engagement (24) jusqu'à la sous-face de la tête de serrage (20).

3. Dispositif de coupe selon la revendication 1 ou 2, **caractérisé en ce que** le bombement (32) de la face avant (28) s'étend avec sa courbure prédéfinie sur toute la hauteur de la tête de serrage (20).

4. Dispositif de coupe selon l'une des revendications 1 à 3, **caractérisé en ce que** l'écart entre la face avant (28) bombée de la tête de serrage (20) et la lame (26) en train d'usiner de l'outil d'enlèvement de copeaux (22) est très légèrement supérieur au diamètre le plus grand possible de la pièce (30) rotative prévue pour l'usinage avec cet outil d'enlèvement de copeaux (22).

5. Dispositif de coupe selon l'une des revendications 1 à 4, **caractérisé en ce que** la face avant (28) bombée sur la sous-face de la tête de serrage (20) passe dans une surface d'appui (46) qui s'étend de manière oblique par rapport au sens d'avancée de l'outil d'enlèvement de copeaux (22) depuis l'engagement (24) en direction de la tête de serrage (20).

6. Dispositif de coupe selon l'une des revendications 1 à 5, **caractérisé en ce que** l'outil d'enlèvement de copeaux (22) est muni de deux lames (26) actives diamétralement opposées.
